# EUROPEAN PATENT APPLICATION

(11) **EP 4 425 437 A1**
(43) Date of publication of application: **04.09.2024**
(21) Application number: 24159576.8
(22) Date of filing: 26.02.2024
(51) Int. Cl.: G06T 15/50, G06T 19/00

(54) **IMAGE PROCESSING APPARATUS, IMAGE PROCESSING METHOD, AND VIRTUAL STUDIO SYSTEM**

(30) Priority: 02.03.2023 JP 2023032179
(71) Applicant: CANON KABUSHIKI KAISHA, Tokyo 146-8501 (JP)
(72) Inventor: KOBAYASHI, Satoru, Tokyo, 146-8501 (JP); YAMASHITA, Gou, Tokyo, 146-8501 (JP); SUZUKI, Toshimasa, Tokyo, 146-8501 (JP); FURESAWA, Ayako, Tokyo, 146-8501 (JP)
(74) Representative: TBK

(57) **Abstract**

An image processing apparatus (110) capable of causing the influence of a light source (350) that is in a captured scene to affect a background image of in-camera VFX video, is disclosed. The apparatus (110) acquires information relating to a light source (350) existing in real space captured by an image capture apparatus (200) and generates, based on a three-dimensional model of a virtual space, an image to be displayed on a display apparatus (310, 320) disposed in the real space. The apparatus (110) generates the image in which an influence exerted by light from the light source (350) on the virtual space has been affected.

## Description

### BACKGROUND OF THE INVENTION

### Field of the Invention

The present invention relates to an image processing apparatus, an image processing method, and a virtual studio system.

### Description of the Related Art

A method (in-camera VFX) for acquiring visual effects (VFX) video without compositing background images and captured images, by capturing a subject with an image that depends on the position and orientation of the camera as the background is known (Japanese Patent No. 7190594).

The background image is generated as an image in which virtual space is seen from the viewpoint of the camera that captures the subject. On the other hand, in real space (captured scene) in which the subject is present, there can exist artificial and natural light sources such as the headlights of a vehicle, a handheld light source held by the subject, and a campfire. Conventionally, even in the case where light that is emitted by a light source that exists in real space exerts an influence on virtual space in this way, the background image that is generated does not change and thus may feel unnatural.

### SUMMARY OF THE INVENTION

In view of such a problem, the present invention, in its an aspect, provides an image processing apparatus and an image processing method capable of causing the influence of a light source that is in a captured scene to affect a background image of in-camera VFX video.

The present invention in its first aspect provides an image processing apparatus according to claims 1 to 12.

The present invention in its second aspect provides a virtual studio system according to claim 13.

The present invention in its third aspect provides an image processing method according to claim 14.

The present invention in its fourth aspect provides a computer program according to claim 15.

Further features of the present invention will become apparent from the following description of exemplary embodiments (with reference to the attached drawings).

### BRIEF DESCRIPTION OF THE DRAWINGS

FIG. 1 is a schematic diagram of a virtual studio system according to an embodiment.
FIG. 2 is a block diagram showing an example functional configuration of a camera in FIG. 1 and the connection relation between devices.
FIG. 3 is a block diagram showing an example functional configuration of a scene control apparatus.
FIG. 4 is a flowchart relating to scene control operations.
FIG. 5 shows an example of light source information that is stored in the scene control apparatus.
FIG. 6 is a flowchart relating to a modification of the scene control operations.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

### Overview of Virtual Studio System

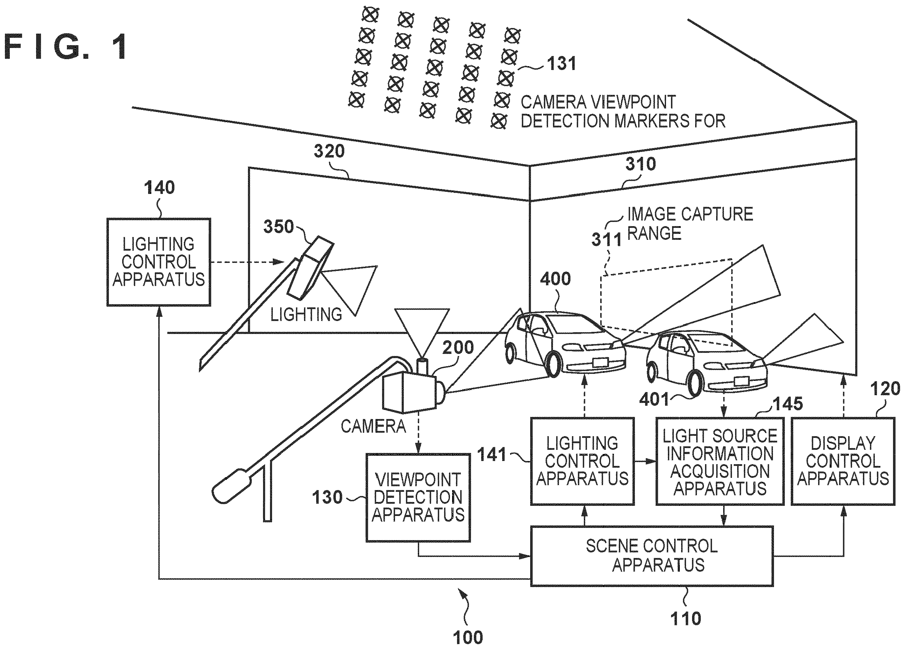

FIG. 1 is a schematic diagram of a virtual studio system according to an embodiment. In a virtual studio 100, a camera 200 captures in-camera VFX video by capturing images of automobiles 400 and 401 serving as an example of real subjects, with an image that is displayed on large-screen display apparatuses 310 and 320, also called an LED wall, as the background, for example. An image capture range 311 is an example of the range of the background image that is captured by the camera 200.

A viewpoint detection apparatus 130 detects a viewpoint (position and orientation) of the camera 200, based on absolute coordinates of a marker 131 provided on a ceiling and the position of the marker 131 in an image of the ceiling that is captured by a viewpoint detection camera provided in the camera 200. Note that the position and orientation of the camera 200 can be detected using any known method.

A scene control apparatus 110 performs rendering of a preset three-dimensional model of virtual space according to a viewpoint of the camera 200 detected by the viewpoint detection apparatus 130, and generates a computer graphics (CG) background image at a predetermined frame rate. Note that, in the case where the shooting direction of the camera 200 is not directly facing the display apparatus 310, the scene control apparatus 110 applies coordinate transformation (transformation processing) necessary in order to display the background image on the display apparatus 310. This similarly applies to the background image that is displayed on the display apparatus 320. The scene control apparatus 110 outputs the generated background image to a display control apparatus 120.

As will be described later, the scene control apparatus 110 acquires information relating to light sources (here, headlights of automobiles 400 and 401) that exist in the captured scene, and causes the influence exerted by light emitted by the light source on virtual space to affect the background image.

The display control apparatus 120 causes the display apparatuses 310 and 320 disposed in real space to display the background image to coincide with the image capture timing of the camera 200. In the case where the display apparatuses 310 and 320 are each constituted by a plurality of display panels, the display control apparatus 120 causes display to be performed after dividing the background image according to the number of display panels.

Alighting control apparatus 140 controls the operations of lighting equipment that lights up the captured scene, and, here, controls the operations of lighting equipment 350 that lights up the automobiles 400 and 401 which are real subj ects.

Alighting control apparatus 141 controls the operations of light sources that exist in the captured scene. Here, the lighting control apparatus 141 controls the operations of the headlights of the automobiles 400 and 401.

Note that the types of operations (on, off, brightness, color, etc.) of the lighting equipment or light sources that are controlled by the lighting control apparatuses 140 and 141 can vary according to the type of lighting equipment or light source.

The operations of the lighting control apparatuses 140 and 141 are performed in accordance with a predetermined sequence by the scene control apparatus 110. Accordingly, the operations of the lighting equipment 350 and the headlights of the automobiles 400 and 401 are substantively controlled by the scene control apparatus 110.

A light source information acquisition apparatus 145 detects information relating to the presence or absence of moving light sources within the captured scene, and the position, brightness and irradiation direction thereof, and supplies the detected information to the scene control apparatus 110. A moving light source is a light source whose position and irradiation direction cannot be known beforehand, such as a light source held by a human subject, for example. The light source information acquisition apparatus 145 is able to detect information of moving light sources by a known method, based on the output of a position and orientation sensor provided in the light source or the luminance information of images of the captured scene, for example. Note that images of the captured scene can be acquired using a plurality of cameras including a camera (not shown) different from the camera 200. The light source information acquisition apparatus 145 is also able to acquire information relating to the lighting equipment 350 that is controlled by the lighting control apparatus 140 from the lighting control apparatus 140.

Note that information relating to a light source whose three-dimensional position is fixed (fixed light source) and static information (e.g., type of light source, diffusion pattern of light, etc.) included in information relating to a light source whose three-dimensional position is not fixed (moving light source) can be stored in advance in the scene control apparatus 110. In FIG. 1, information relating to the headlights of the automobiles 400 and 401 corresponds to information of fixed light sources. Note that the diffusion pattern of light is information indicating how the irradiation range of light extends according to the distance from the light source and how the intensity of light is distributed on the irradiated surface.

Also, a synchronization signal is supplied to the camera 200, the viewpoint detection apparatus 130, the scene control apparatus 110 and the display control apparatus 120 from a reference clock generation apparatus, which is also called a sync generator. As a result of each apparatus controlling the operation timing in accordance with the reference clock, synchronization of the shooting period of the camera 200 and the display period of the display apparatuses 310 and 320 and the like are realized. Since technologies for synchronizing operations between apparatuses based on a reference clock, such as generator locking (genlock), for example, are known, a detailed description thereof will be omitted.

Herein, the automobiles 400 and 401 which are real objects that are present between the display apparatuses 310 and 320 and the camera 200 will be referred to as real subjects, and subjects that are included in the background image displayed on the display apparatuses 310 and 320 will be referred to as virtual subjects. Note that, for convenience, herein, it is assumed that the real subjects are two automobiles, but there is no limitation to the type of subject or the number of types.

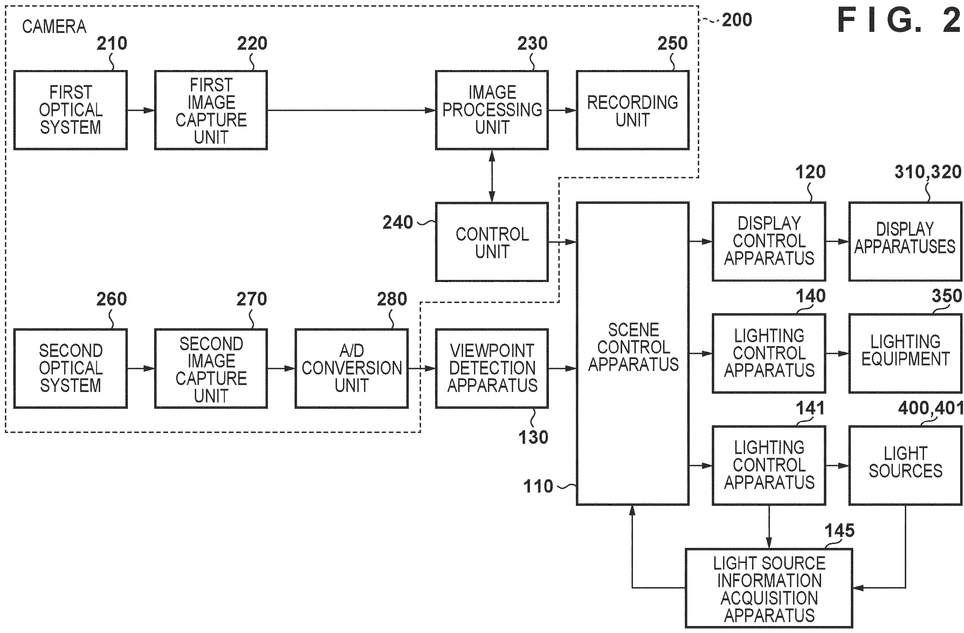

FIG. 2 is a block diagram showing the connection relation of the apparatuses shown in FIG. 1 and an example functional configuration of the camera 200. Among the functional blocks of the camera 200, a first optical system 210, a first image capture unit 220, an image processing unit 230 and a recording unit 250 realize a function of capturing and recording in-camera VFX video. Also, a second optical system 260, a second image capture unit 270 and an A/D conversion unit 280 realize a function of capturing images for detecting the viewpoint of the camera 200. Hereinafter, unless otherwise stated, the first image capture unit 220 and the second image capture unit 270 capture a moving image having a predetermined frame rate.

A control unit 240 has a processor (CPU, MPU, microprocessor, etc.) capable of executing programs, a ROM and a RAM. The control unit 240 controls the operations of each functional block of the camera 200 and realizes the operations of the camera 200 described later, by loading programs stored in the ROM to the RAM and executing the programs. Note that, although not illustrated, the control unit 240 is communicatively connected to each functional block of the camera 200.

The angle of view and optical axis direction of the second optical system 260 are determined so as to capture an image of the marker 131 for viewpoint detection disposed on the ceiling of the studio. The angle of view may be fixed or changeable. The second image capture unit 270 has an image sensor, and converts an optical image formed by the second optical system 260 into an analog image signal. Since the image for viewpoint detection can be any image in which the image coordinates of the marker 131 can be acquired, color information is not required, and a monochrome image sensor may be used.

The A/D conversion unit 280 performs A/D conversion on the analog image signal that is output by the second image capture unit 270 to generate a digital image signal. The digital image signal is output to the viewpoint detection apparatus 130.

The first optical system 210 is an optical system for capturing in-camera VFX video. Accordingly, the angle of view and optical axis direction of the first optical system are determined so as to form an optical image of the real subjects 400 and 401 with the image displayed on the display apparatuses 310 and 320 as the background. The angle of view of the first optical system 210 may be changeable.

The first image capture unit 220 has an image sensor and converts the optical image that is formed by the first optical system 210 into an analog image signal. The image sensor included in the first image capture unit 220 may be a known CCD or CMOS color image sensor having a Bayer primary color filter, for example. The analog image signal that is output by the first image capture unit 220 is supplied to the image processing unit 230.

The image processing unit 230 performs processing such as generating signals and image data that depend on the application, and acquiring and/or generating various information, by applying predetermined image processing to the analog image signal output by the first image capture unit 220. The image processing unit 230 may be a dedicated hardware circuit such as an application specific integrated circuit (ASIC) designed to realize a specific function, for example. Alternatively, the image processing unit 230 may be configured to realize a specific function as a result of a processor such as a digital signal processor (DSP) or a graphics processing unit (GPU) executing software.

The image processing that is applied by the image processing unit 230 can, for example, include preprocessing, color interpolation processing, correction processing, detection processing, data processing, evaluation value calculation processing and special effects processing.

Preprocessing can include A/D conversion, signal amplification, reference level adjustment and defective pixel correction.

The color interpolation processing is processing that is performed in the case where the image sensor is provided with a color filter, and involves interpolating the values of color components that are not included in the individual pixel data constituting the image data. Color interpolation is also called demosaicing.

Correction processing can include white balance adjustment, tone correction, correction of image degradation caused by optical aberration of the first optical system 210 (image recovery), correction of the influence of peripheral dimming of the first optical system 210 and color correction.

The detection processing can include detection of a feature region or a region of a specific subject (e.g., face region or body region), detection of movement thereof, and person recognition processing.

The data processing can include processing such as cutting a region down in size (trimming), compositing, scaling, encoding/decoding and header information generation (datafile generation). The data processing can also include generation of image data for display and image data for recording.

The evaluation value calculation processing can include processing such as generation of signals and evaluation values to be used in autofocus detection (AF) and generation of evaluation values to be used in automatic exposure control (AE). An evaluation value to be used in AE is information relating to the luminance of the captured scene, and this information can relate to the luminance of different portions of the captured scene, according to the exposure mode that is set, for example. For example, this information may reflect the luminance of the entire captured scene, or may relate to the luminance of a region of a specific subject.

The special effects processing can include adding bokeh effect, changing color tone and relighting. The special effects processing also includes processing for causing the influence of the light source to affect a background image, which will be described later.

Note that the above are illustrative examples of processing applicable by the image processing unit 230, and do not limit the processing that is applied by the image processing unit 230. The image processing unit 230 outputs acquired or generated information and data to functional blocks that correspond to the application. For example, the image processing unit 230 outputs image data for recording to the recording unit 250, and outputs information relating to the luminance of the captured scene to the control unit 240.

The control unit 240 outputs the information relating to the luminance of the captured scene, acquired from the image processing unit 230, to the scene control apparatus 110. Also, the control unit 240 is able to execute AE processing for determining the exposure settings based on the information relating to the luminance of the captured scene, and to control the operations of the first image capture unit 220 in accordance with the determined exposure settings. The control unit 240 is able to determine the exposure settings such that the entire captured scene is appropriately exposed or such that a region (e.g., region of real subject) of a portion included in the captured scene is appropriately exposed, for example.

Note that the exposure settings are generally determined by a combination of aperture value, shutter speed (exposure time) and sensitivity for capturing. Thus, the control unit 240 is able to determine a combination of the values of these three parameters as exposure settings for obtaining a correct exposure. However, when the aperture value or exposure time is changed during moving image shooting, the depth of field changes and the distance that a moving subject moves between frames changes. Thus, in the AE processing of the present embodiment, the sensitivity for capturing is, in general, determined without changing the aperture value or shutter speed.

Note that the focusing distance of the first optical system 210 is automatically adjustable as a result of the control unit 240 executing the AF processing based on the evaluation values generated by the image processing unit 230. On the other hand, since the distance between the camera 200 and the ceiling is substantially constant, the focusing distance of the second optical system 260 may be adjusted by manual focus before image capture, and not be adjusted during image capture. Note that a configuration may be adopted in which, by constituting the A/D conversion unit 280 similarly to the image processing unit 230, the control unit 240 also performs automatic adjustment of the focusing distance of the second optical system 260 by AF processing.

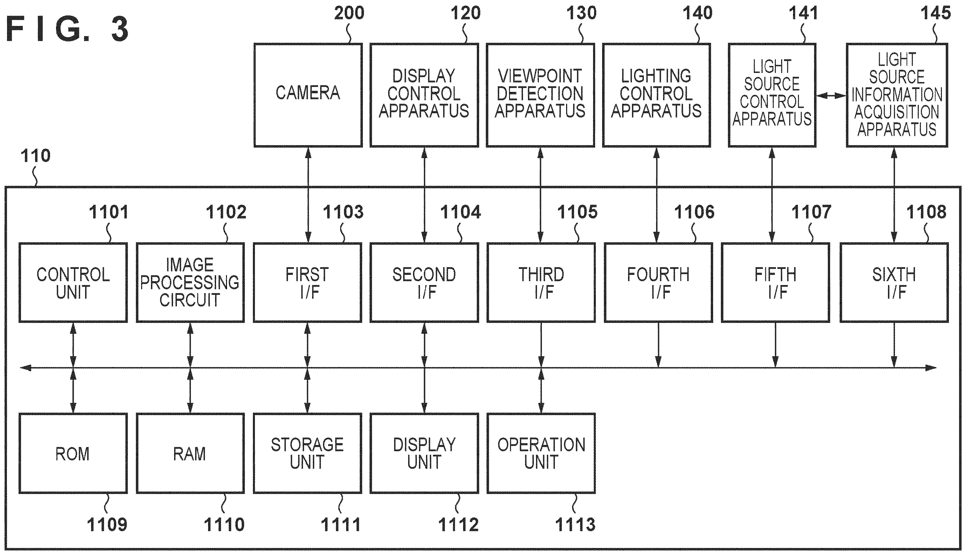

FIG. 3 is a block diagram showing an example functional configuration of the scene control apparatus 110. The scene control apparatus 110 can be realized using a computer device, for example.

A control unit 1101 is, for example, a CPU, and realizes the functions of the scene control apparatus 110, by loading one or more application programs stored in a ROM 1109 to a RAM 1110 and executing the one or more application programs. Note that the control unit 1101 controls the operation timing of the scene control apparatus 110 in accordance with the synchronization signal that is supplied from the reference clock generation apparatus.

An image processing circuit 1102 is, for example, a graphics board equipped with a GPU. The image processing circuit 1102 is capable of executing image processing, such as rendering of CG, at high speed.

First to sixth I/Fs 1103 to 1108 are communication interfaces for connecting external apparatuses. In the present embodiment, the camera 200 is connected to the first I/F 1103, the display control apparatus 120 is connected to the second I/F 1104, and the viewpoint detection apparatus 130 is connected to the third I/F 1105. Also, the lighting control apparatus 140 is connected to the fourth I/F 1105, the light source control apparatus 141 is connected to the fifth I/F 1107, and the light source information acquisition apparatus 145 is connected to the sixth I/F 1108. Note that the first to sixth I/Fs 1103 to 1108 are assumed to conform to standards that depend on the type of external apparatus that is connected and the type of signal that is communicated. For convenience, the scene control apparatus 110 and each external apparatus are illustrated as being connected through one I/F, but may be connected using a plurality of I/Fs.

The control unit 1101 acquires captured image data and information relating to the luminance of the captured scene from the camera 200 through the first I/F 1103. Also, the control unit 1101 acquires information relating to the viewpoint of the camera 200 from the viewpoint detection apparatus 130 by communication through the third I/F 1105. The control unit 1101 outputs image data for display (background image data) to the display control apparatus through the second I/F 1104. Also, the control unit 1101 outputs a control signal to the lighting control apparatus 140 through the fourth I/F 1106 and a control signal to the light source control apparatus 141 through the fifth I/F 1107. Furthermore, the control unit 1101 acquires information relating to light sources that exist in real space from the light source information acquisition apparatus 145 through the sixth I/F 1108. Note that the scene control apparatus 110 may have seven or more communication interfaces with external apparatuses.

The ROM 1109 stores some of the programs (BIOS, bootstrap loader, firmware) that are executed by the control unit 1101, setting values of the scene control apparatus 110, and the like.

The RAM 1109 is used as a working memory of the image processing circuit 1102 and as a video memory of a display unit 1112, in addition to being used as a main memory of the control unit 1101.

A storage unit 1111 is a mass storage device such as a hard disk or an SSD. The storage unit 1111 stores basic software (OS), application programs, user data and the like. An application program (e.g., game engine application) that generates a background image corresponding to the viewpoint of the camera 200 and data required for generating the background image (3D model of virtual space, texture, etc.) are also stored in the storage unit 1111.

The display unit 1112 is, for example, a liquid crystal display apparatus. The display unit 1112 may be a touch display. The display unit 1112 displays a scene control application, a background image generation application (e.g., game engine application), a GUI provided by the OS, and the like.

An operation unit 1113 has a plurality of input devices that are operable by the user, such as a keyboard, a mouse and a touchpad. In the case where the display unit 1112 is a touch display, a touch panel is a constituent element of the operation unit 1113.

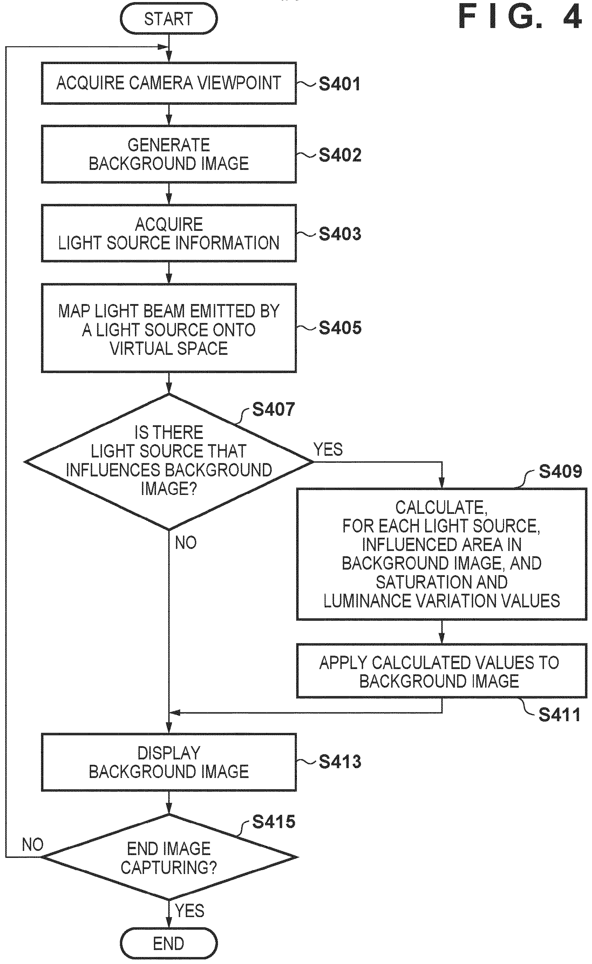

In the present embodiment, the scene control apparatus 110 generates a background image in which the influence of light sources that exist in the captured scene (real space) on a virtual space has been affected. Hereinafter, scene control operations by the scene control apparatus 110 will be described, using the flowchart shown in FIG. 4.

Note that since it is possible for the following series of processing required in order to capture in-camera VFX video to be executed by a known method, a detailed description of the respective processing will be omitted.
. Processing for detecting the viewpoint (position and orientation) of the camera 200 by the viewpoint detection apparatus 130 using an image of the marker 131
▪ Processing for generating a background image by the scene control apparatus 110 according to the detected viewpoint of the camera 200, which does not take the influence of light sources in the captured scene into account.
▪ Processing for controlling display of the background image on the display apparatuses 310 and 320 by the display control apparatus 120

Also, the scene control apparatus 110 controls the brightness (including turning off) of the lighting equipment 350 through the lighting control apparatus 140, in accordance with a lighting pattern set in advance according to the elapsed time (timeline) from the start of image capture. Similarly, the scene control apparatus 110 also controls on/off of the headlights of the automobiles 400 and 401 through the lighting control apparatus 141. Note that switching between low beam and high beam of the automobiles 400 and 401, the left and right blinkers, and the like may also be controllable.

In the following description, the operations that are executed by the scene control apparatus 110 are actually realized by the control unit 1101 executing an appropriate application program.

In step S401, the scene control apparatus 110 acquires information relating to the viewpoint (position and orientation) of the camera 200 detected by the viewpoint detection apparatus 130.

In step S402, the scene control apparatus 110 generates a CG background image, by rendering a 3D model of virtual space using the viewpoint and angle of view of the camera 200. The background image that is generated at this stage does not take light sources that exist in real space (captured scene) into account. The scene control apparatus 110 stores the generated background image in the RAM 1110.

In step S403, the scene control apparatus 110 acquires light source information from the light source information acquisition apparatus 145. The light source information acquisition apparatus 145 supplies, to the scene control apparatus 110, the number of light sources (real light sources) that exist in the captured scene and, if real light sources exist, information of each light source.

The light source information acquired by the light source information acquisition apparatus 145 is information relating to the real light sources that the scene control apparatus 110 is unable to acquire. Specifically, the light source information is information relating to real light sources that the scene control unit 110 does not control or is unable to control and information that cannot be ascertained beforehand.

Real light sources that the scene control unit 110 does not control or is unable to control include, but are not limited to, light sources that real subjects autonomously control (e.g., lights operated by human subjects), for example. Also, information that cannot be ascertained beforehand includes, but is not limited to, items that can be dynamically changed (e.g., orientation or irradiation direction) included in information of fixed light sources, for example. A natural light source such as a campfire is a real light source that the scene control apparatus 110 does not control and is unable to control, but as long as information such as position and type is ascertained beforehand, the light source information acquisition apparatus 145 does not need to detect information (information may be detected).

The light source information acquisition apparatus 145 is able to detect information relating to real light sources with various methods. Information relating to a moving light source, for example, can be detected by communicating with the moving light source (or a sensor provided in the moving light source). For example, the three-dimensional position and orientation (irradiation direction) of a moving light source can be detected, by communicating with the moving light source or a position and orientation sensor provided in the moving light source. Note that the sensor is configured to transmit information in association with a unique ID, in order to be able to specify which real light source the acquired information relates to.

Also, the light source information acquisition apparatus 145 may detect information relating to a real light source using images of the captured scene. For example, a region having a luminance greater than or equal to a threshold value is extracted from images of a captured scene captured by a plurality of cameras having different shooting directions to each other and whose three-dimensional position and orientation are known, and the three-dimensional position of the real light source and the orientation (irradiation direction) thereof can be detected based on the correspondence relation between the images.

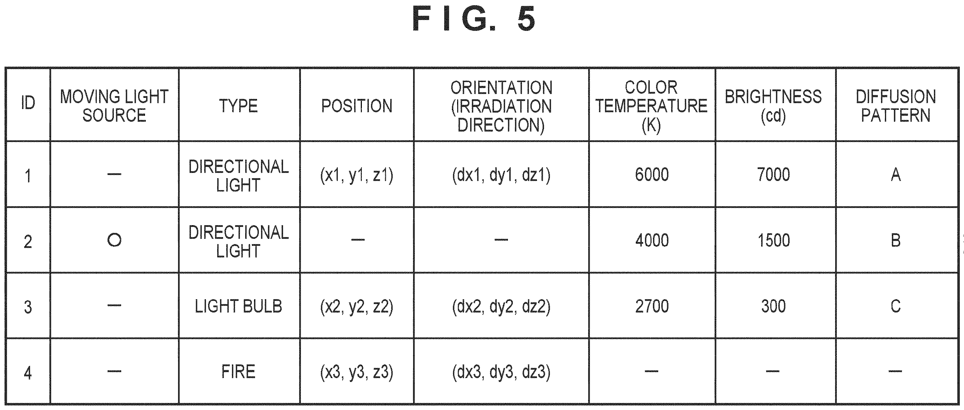

The scene control unit 110 also acquires prestored static light source information with reference to the ROM 1109. FIG. 5 is a diagram showing an example of light source information that is stored in the ROM 1109. An ID is identification information allocated to each reality light source. Here, the IDs are sequential numbers, but may be any unique information of the real light sources. Type information specifying whether the light source is a moving light source or a fixed light source is included for each real light source. Here, the real light source whose ID is 2 is a moving light source, and the other real light sources are fixed light sources.

The type of light source is mainly information for identifying whether the light source is artificial light source or a natural light source. Position is indicated by three-dimensional coordinates. The origin of the three-dimensional coordinates is predetermined. Also, orientation (irradiation direction) is the xyz components of a vector representing direction. Also, color temperature and brightness are general light source information. A plurality of types of diffusion patterns are defined in advance, and which type the light source corresponds to is stored as light source information. Blank items in FIG. 5 indicate dynamic information or that corresponding information does not exist.

Note that the light source information shown in FIG. 5 is merely an illustrative example, and the types of items and the format of information stored for each item can be changed as appropriate. As long as information necessary in order to determine whether light that is irradiated from individual real light sources exerts an influence on the background image (i.e., an influence on the virtual space represented by the background image) is obtained, there is no limitation to the items and contents of the light source information that is detected by the light source information acquisition apparatus 145 and the light source information that is stored in the ROM 1109.

Returning to FIG. 4, the scene control unit 110, in step S405, maps the light emitted by the individual real light sources onto virtual space, based on the light source information acquired in step S403. Specifically, the scene control apparatus 110 calculates the three-dimensional range over which the light emitted by the individual real light sources are irradiated. The scene control apparatus 110 then maps the three-dimensional ranges onto virtual space, with the captured scene (real space) regarded as part of the virtual space represented by the three-dimensional model that is used in generating the background image.

At this time, the reach of the light can be calculated as the distance at which the light attenuates to a predetermined brightness in air, for example. The predetermined brightness may be a constant value or may be the current brightness of the virtual studio, for example. The current brightness of the virtual studio can be obtained as the average luminance of the captured scene obtained from the camera 200 or the average luminance obtained by the image processing unit 240 from the captured image of the camera 200, for example.

In step S407, the scene control apparatus 110 determines whether there is a real light source that exerts an influence on the background image, based on the irradiation ranges mapped in step S405. Specifically, the scene control apparatus 110 determines that a real light source having an irradiation range that intersects the display surfaces of the display apparatuses 310 and 320 is a real light source that exerts an influence on the background image. Alternatively, the scene control apparatus 110 determines that a real light source that emits light reaching the display surfaces of the display apparatuses 310 and 320 is a real light source that exerts an influence on the background image. The scene control apparatus 110 executes step S409 if it is determined that there is a real light source exerting an influence on the background image, and executes step S413 if it is not determined that there is such a real light source.

In step S409, the scene control apparatus 110 calculates, for each real light source that exerts an influence on the background image, the range of the background image that is influenced and variation values for saturation and luminance. Specifically, the scene control apparatus 110 calculates the region of the display surface that intersects the irradiation range of the real light source as the range of the background image that is influenced by the real light source. Also, the scene control apparatus 110 calculates, for each pixel of the background image, the amount of variation in saturation and luminance as the influence exerted by the real light source, based on the luminance distribution in the region of the display surface intersecting the irradiation range of the real light source and the color temperature of the real light source. Note that these calculation methods are examples, and calculation may be performed with other methods.

In step S411, the scene control apparatus 110 causes the influence of the real light source to affect the background image, by applying the amount of variation in saturation and luminance to the pixel values of the region of the background image generated in step S402 that is influenced by the real light source.

In step S413, the scene control apparatus 110 outputs the data of the background image to the display control apparatus 120. Note that, in the case where the image capturing direction of the camera 200 is not directly facing the display apparatuses 310 and 320, the scene control apparatus 110 outputs the data of the background image to the display control apparatus 120 after applying processing for transforming the background image into an image viewed from a position directly facing the display apparatuses 310 and 320. The display control apparatus 120 causes the display apparatuses 310 and 320 to display the data of the background image generated by the scene control unit 110.

In step S415, the scene control unit 110 determines whether to end image capture. The scene control unit 110 is able to determine to end image capture, for example, if image capture in accordance with a predetermined timeline is completed, or if the user instructs to end image capture through the operation unit 1113. The scene control apparatus 110 ends the scene control operations if it is determined to end image capture, and executes the operations from step S401 again if it is not determined to end image capture.

By adopting such a configuration, the scene control apparatus 110 is able to causes the influence of light emitted by light sources (real light sources) that exist in the captured scene to affect the background image. It thereby becomes possible to capture a more natural in-camera VFX footage, and the time and effort required for correction in postproduction can be eliminated.

Here, the case where the background image that is generated in step S402 is a CG image is described. However, the above processing is also similarly applicable in the case where the background image that is generated in step S402 is a captured image. In this case, the viewpoint of the camera that captures the background image is synchronized with the viewpoint of the camera 200. Also, video of the background image that is captured is supplied from the camera to the display control apparatus 120. The processing described in step S409 and step S411 then need only be applied for real light sources having an irradiation range that intersects the display surfaces of the display apparatuses 310 and 320.

### Modification

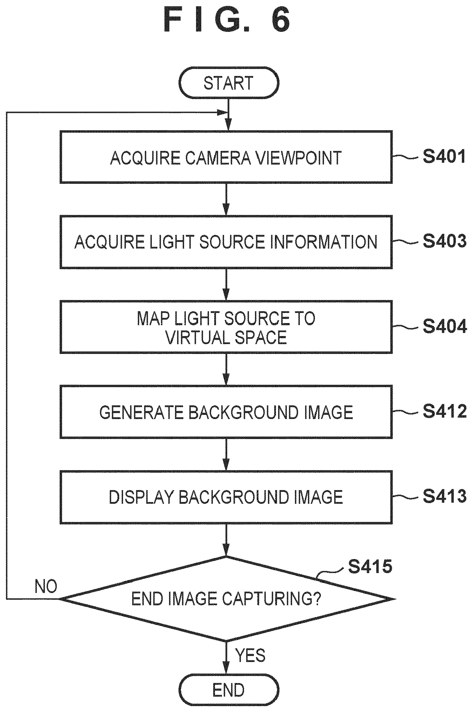

Next, a modification of the scene control operations will be described, using the flowchart shown in FIG. 6. In the scene control operations described using FIG. 4, the influence of real light sources is included in a background image generated without taking real light sources into account. In contrast, in the modification, the background image is generated after adding real light sources as virtual light sources.

In FIG. 6, the steps of executing the operations described in FIG. 4 are denoted with the same reference numbers as in FIG. 4, and description thereof will be omitted. In the modification, the scene control apparatus 110 executes step S401 and then executes step S403 without executing step S402 to acquire light source information.

Then, in step S404, the scene control apparatus 110 adds a virtual light source that is based on the light source information to the virtual light source that is used when rendering the three-dimensional model of virtual space. This is equivalent to mapping a real light source onto virtual space. The scene control apparatus 110 is able to add a real light source as a virtual light source, by setting the light source parameters required by the application program for generating the background image, based on the light source information acquired in step S403.

Note that, in this modification, the three-dimensional model of virtual space includes virtual objects existing in virtual space, and additionally includes virtual objects obtained by mapping real objects existing in real space onto virtual space. This is because shadow produced by the real objects that reaches the display surfaces of the display apparatuses 310 and 320 is reflected in the background image.

In the modification, it is not determined whether there are real light sources that exert an influence on the background image. This is because any influence of real light sources is included in the background image by rendering, and thus determination of such real light sources is not necessary. However, in order to reduce the rendering load, a configuration may be adopted in which similar processing to step S405 and step S407 in FIG. 4 is executed, and only real light sources that exert an influence on the background image are added as virtual light sources.

In step S412, the scene control apparatus 110 generates a background image. Since real light sources are added as virtual light sources in step S404, a background image that includes any influence of real light sources is generated.

Since the processing from step S413 onward is as described in FIG. 4, description thereof will be omitted.

In this modification, a background image is generated by rendering a three-dimensional model of virtual space with real light sources added as virtual light sources. Thus, in the case where light from a real light source hits an object (virtual object) in virtual space, the shade and shadow produced by the light from the real light source is also reflected in the background image.

Also, the background image is generated, for a three-dimensional model in which the captured scene (real space) is also part of the virtual space, by rendering an image that is observed on the display surfaces of the display apparatuses 310 and 320. Accordingly, a background image is obtained in which the portion of shadow of real objects that reaches the display surfaces of the display apparatuses 310 and 320 is reflected. For example, in scenes where the position of the light source is low and a long shadow is cast, such as morning and evening scenes, it becomes possible to generate a more natural background image.

As described above, according to the present embodiment, the influence of light from light sources that exist in a captured scene (real space) is included in the background image (virtual space image) that is used in order to capture in-camera VFX video. Thus, it becomes possible to capture more natural in-camera VFX video.

### Other Embodiments

Also, in the above-described embodiment, a configuration is described in which the scene control apparatus 110, the display control apparatus 120 and the lighting control apparatuses 140 and 141 are separate apparatuses. However, the scene control apparatus 100 may have the functions of the display control apparatus 120 and the lighting control apparatus 140.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}₎, a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus (110) capable of causing the influence of a light source (350) that is in a captured scene to affect a background image of in-camera VFX video, is disclosed. The apparatus (110) acquires information relating to a light source (350) existing in real space captured by an image capture apparatus (200) and generates, based on a three-dimensional model of a virtual space, an image to be displayed on a display apparatus (310, 320) disposed in the real space. The apparatus (110) generates the image in which an influence exerted by light from the light source (350) on the virtual space has been affected.

## Claims

1. An image processing apparatus (110) comprising:
acquisition means (1101) for acquiring information relating to a light source (350) existing in real space captured by an image capture apparatus (200); and
generation means (1101, 1102) for generating, based on a three-dimensional model of a virtual space, an image to be displayed on a display apparatus (310, 320) disposed in the real space,
wherein the generation means (1101, 1102) generates, based on the information, the image in which an influence exerted by light from the light source (350) on the virtual space has been affected.

2. The image processing apparatus (110) according to claim 1, further comprising:
determination means (1101) for determining whether the light emitted by the light source exerts an influence on the virtual space,
wherein, if it is determined that the light exerts an influence on the virtual space, the generation means (1101, 1102) generates the image in which the influence exerted by the light has been affected.

3. The image processing apparatus (110) according to claim 2,
wherein the determination means (1101) determines that the light exerts an influence on the virtual space, if it is determined that the light reaches a display surface of the display apparatus (310, 320).

4. The image processing apparatus (110) according to any one of claims 1 to 3,
wherein the generation means (1101, 1102) generates the image in which the influence exerted by the light has been affected, by changing a brightness and a saturation of a region of the image lighted up by the light.

5. The image processing apparatus (110) according to any one of claims 1 to 3,
wherein the generation means (1101, 1102) generates the image by rendering the three-dimensional model of the virtual space using a viewpoint of the image capture apparatus (200), and
the generation means (1101, 1102) generates the image in which the influence exerted by the light on the virtual space has been affected, by mapping the light source onto the virtual space and rendering the three-dimensional model.

6. The image processing apparatus (110) according to claim 5,
wherein the influence includes shade and shadow that occurs in a virtual object present in the virtual space due to the light source (350).

7. The image processing apparatus (110) according to claims 5,
wherein the influence includes shadow produced by a real object due to the light source (350).

8. The image processing apparatus (110) according to any one of claims 1 to 7,
wherein the information relating to the light source (350) includes, out of a three-dimensional position of the light source (350), an orientation or irradiation direction of the light source (350), a brightness of the light source (350), and a type of the light source (350), at least the three-dimensional position.

9. The image processing apparatus (110) according to claim 8,
wherein the acquisition means (1101) acquires the three-dimensional position of the light source (350), based on an image captured of the real space by a different image capture apparatus from the image capture apparatus (200).

10. The image processing apparatus (110) according to claim 8,
wherein the acquisition means (1101) acquires the three-dimensional position and the orientation of the light source (350), based on an output of a sensor provided in the light source (350).

11. The image processing apparatus (110) according to any one of claims 8 to 10,
wherein the acquisition means (1101) acquires the information relating to the light source (350) from a control apparatus (141) configured to control an operation of the light source (350).

12. The image processing apparatus (110) according to any one of claims 8 to 11,
wherein at least some of the information relating to the light source (350) is stored in advance.

13. A virtual studio system (100) comprising:
an image capture apparatus (200);
the image processing apparatus (110) according to any one of claims 1 to 12; and
a display apparatus (310, 320) configured to display the image.

14. An image processing method to be executed by an image processing apparatus (110), the method comprising:
acquiring (S403) information relating to a light source (350) existing in real space captured by an image capture apparatus (200); and
generating (S402, S411), based on a three-dimensional model of a virtual space, an image to be displayed on a display apparatus (310, 320) disposed in the real space,
wherein the generating (S402, S411) includes generating, based on the information, an image in which an influence exerted by light from the light source on the virtual space has been affected.

15. A computer program that causes, when executed by a computer, the computer to function as the image processing apparatus (110) according to any one of claims 1 to 12.
